Europäisches Patentamt

(19) European Patent Office

Office européen des brevets

(11) Publication number: **0 004 423**

**B1**

(12) **EUROPEAN PATENT SPECIFICATION**

(21) Application number: **79300329.4**

(22) Date of filing: **06.03.79**

(51) Int. Cl.³: **H 01 R 4/24**

(54) An electrical connecting arrangement and an electric motor stator assembly

(30) Priority: **17.03.78 US 887584**
**17.03.78 US 887585**
**26.05.78 US 910047**

(43) Date of publication of application:
**03.10.79 Bulletin 79/20**

(45) Publication of the grant of the European patent:
**07.01.81 Bulletin 81/01**

(84) Designated Contracting States:
**DE FR GB IT**

(56) References cited:
**US - A - 3 845 236**
**US - A - 3 899 236**
**US - A - 3 979 615**
**US - A - 4 118 103**

(73) Proprietor: **AMP INCORPORATED**
**Eisenhower Boulevard**
**Harrisburg, Pennsylvania (US)**

(72) Inventor: **Lill, John Francis**
**301 North Progress Avenue Apt. F-22**
**Harrisburg Pennsylvania (US)**

(74) Representative: **Terrell, Thomas Gwyn, et al**
**20 Queensmere**
**Slough, Berkshire SL1 1YZ (GB)**

Courier Press, Leamington Spa, England.

# An electrical connecting arrangement and an electric motor stator assembly

This invention concerns the art of making line connections and relates in particular to an electrical connecting arrangement especially, but not exclusively, for use in an electric motor stator assembly. The invention also relates in particular to an electric motor stator assembly.

We have described in our United States Patent Specification No. 3,979,615 an electrical connecting arrangement comprising an insulating housing defining first, second and third terminal receiving cavities, each cavity communicating with a first wire-admitting slot, first second and third electrical terminals each comprising a plate having a first wire-receiving slot therein and being insertable into a respective one of the cavities so as to force into the first wire-receiving slot of the terminal a wire end extending through the first wire-admitting slot of the cavity and across such cavity, to make electrical connection between the terminal and such wire, the first, second and third terminals having thereon, means for connecting them to respective first, second and third electrical leads.

Although such connecting arrangements have been usefully applied to the manufacture of electric motors of various types and to the manufacture of induction coils, it has not hitherto been found practicable to use such connecting arrangements in the stator assemblies of conventional electric induction motors, because of the confined space that is available in the housings of such motors and because of the disparity between the gauges of the main and the auxiliary windings thereof. According to current practice in the manufacture of electric induction motors, the ends of the windings are connected to leads by means of crimped splice connections which have subsequently to be insulated and buried in the windings prior to the stator assembly being resin dipped and thereafter baked to cure the resin so that the assembly is ready to be assembled to the motor housing.

According to one aspect of the invention, an electrical connecting arrangement as defined in the second paragraph of this specification is characterised in that each plate has a second wire-receiving slot which is juxtaposed to the first wire-receiving slot, the first wire-receiving slot being dimensioned to receive a first wire of a first gauge and the second wire-receiving slot which is narrower than the first wire-receiving slot, being dimensioned to receive a second wire of a second gauge which is smaller than the first gauge, but not to receive a wire of the first gauge, the third cavity having in communication therewith a second wire-admitting slot juxtaposed to the first wire-admitting slot, the first wire-admitting slot, which is narrower than the second wire-admitting slot, being dimensioned to receive a wire of the second gauge but not to receive a wire of the first gauge, the wire-admitting slot of the second cavity being of a width to receive a wire of the second gauge but not to receive a wire of the first gauge; whereby upon positioning one end of the first wire in the wire-admitting slot of the second cavity and positioning the other ends of the first and second wires in the respective first and second wire-admitting slots of the third cavity and thereafter inserting each of the terminals into a respective one of the cavities, the ends of first and second wires are connected to the terminals.

Such electrical connecting arrangement can be mounted on the stator after it has been resin dipped and baked so that the ends of the windings can be connected to the leads immediately prior to the assembly of the stator to the motor housing. It is an important advantage of the connecting arrangement that the terminals can be identical despite the disparity in gauge between the main and the auxiliary windings. Manufacture is also simplified in that the terminals can only be inserted into their cavities with the correct orientation relative thereto.

According to another aspect of the invention, an electric motor stator assembly comprising a stator having windings, and an insulating terminal housing mounted on a face of the stator, the housing having a base adjacent to the stator and a terminal receiving side into which extend first, second and third terminal cavities; each such cavity having a first wire-admitting slot communicating therewith and receiving an end of one of the windings, each such end being wedged in a first wire-receiving slot of an electrical terminal in the cavity and each such terminal being connected to a lead of the stator; is characterised in that the stator has main and auxiliary windings of different gauge and each terminal has a second wire-receiving slot the first wire-receiving slot being dimensioned to receive an end of the main winding and the second wire-receiving slot being dimensioned to receive an end of the auxiliary winding, the first slot of the terminal in the first cavity and the first slot of the terminal in the third cavity, each receiving a respective end of the main winding and the second slot of the terminal in the second cavity and the second slot of the terminal in the third cavity each receiving an end of the auxiliary winding, each cavity having a second wire-admitting slot, each wire admitting slot of such cavity being positioned opposite to one of the wire-receiving slots of the terminal in such cavity. There are disclosed in United States Patent Specifications Nos. 3,845,236 and 3,899,236 common contacts for cables or wires of different gauges. The state of the art is further exemplified by the following United States Patent Specifications Nos. 2,802,958, 3,457,442, 3,793,611, and 3,869,190.

For a better understanding of the invention, embodiments thereof will now be described by way of example with reference to the accompanying drawings, in which:—

Figure 1 is a diagram showing part of the windings of an electric induction motor;

Figure 2 is a perspective view of a first stator assembly for an electric induction motor and a housing for the stator assembly;

Figure 3 is an enlarged perspective view of an electrical terminal housing of the assembly;

Figure 4 is a diagrammatic top plan view of the stator assembly disposed in its housing;

Figure 5 is a diagrammatic top plan view illustrating a modification of the stator assembly;

Figure 6 is an enlarged perspective view of an electrical terminal of the stator assembly;

Figure 7 is an exploded perspective view of a second stator assembly for an electric induction motor, the assembly incorporating a thermal protector for the motor;

Figure 8 is a perspective view of the assembly of Figure 7;

Figure 9 is an exploded perspective view showing an electrical terminal housing and the thermal protector, of the assembly of Figures 7 and 8;

Figure 10 is a fragmentary sectional view of the assembly of Figures 7 and 8 showing the manner in which the thermal protector is positioned therein.

Figure 11 is a fragmentary sectional view taken on the lines XI—XI of Figure 10;

Figure 12 is an enlarged perspective view of an electrical terminal of the assembly of Figures 7 and 8;

Figure 13 is a fragmentary sectional view taken through a cavity of the terminal housing of the assembly of Figures 7 and 8, showing a terminal in such housing connected to a wire; and

Figure 14 is a circuit diagram of the assembly of Figures 7 and 8.

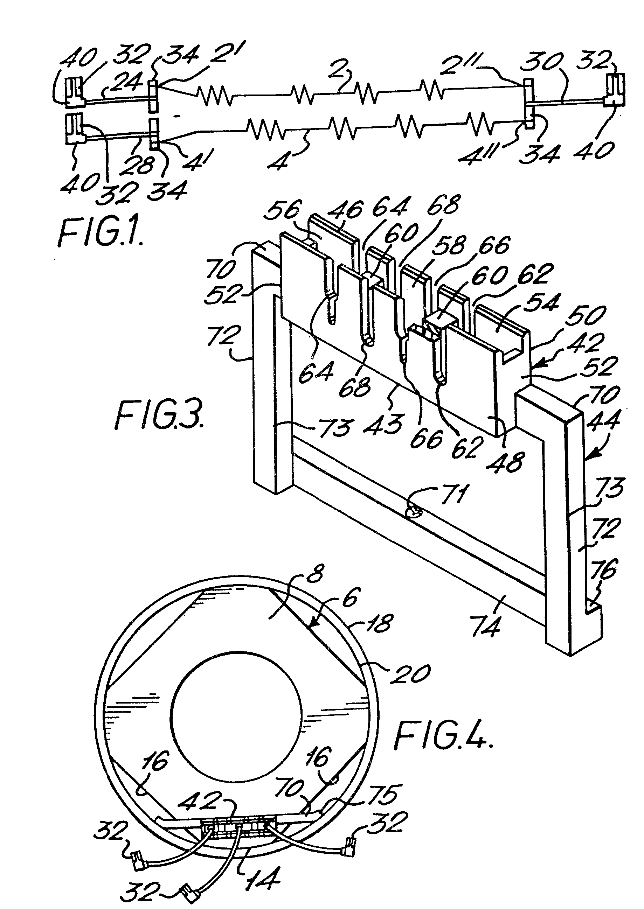

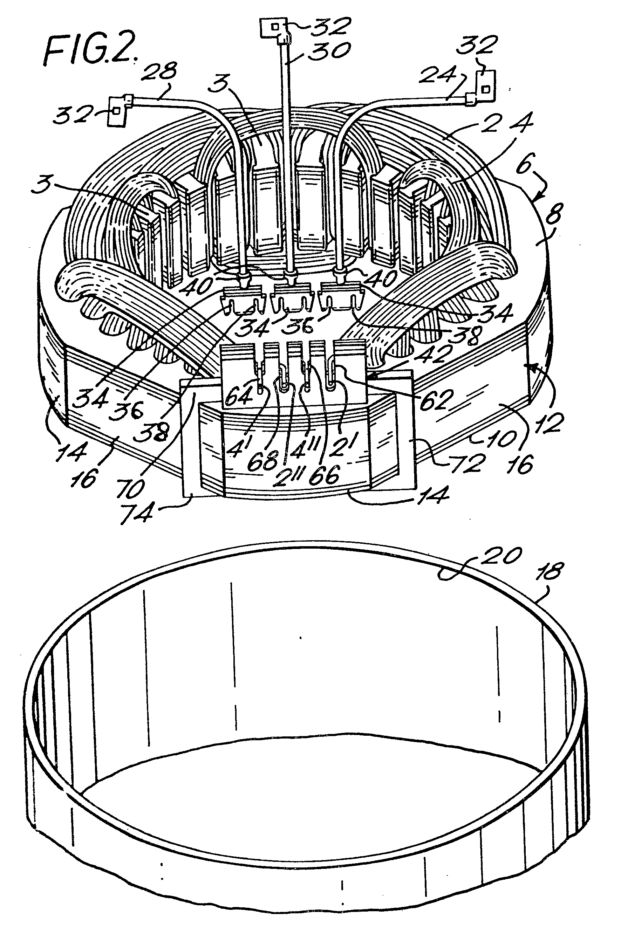

As shown in Figure 2, the stator 6 of a typical single phase electric induction motor comprises a stack of identical mated stampings, welded or otherwise secured to each other. The stator has an upper face 8, a lower face 10, a circumferential surface 12 and a central opening, as shown. Spaced teeth 3 extend inwardly into the central opening and the turns of main and auxiliary windings 2 and 4 extend through the gaps between selected adjacent teeth 3. Ordinarily, the main winding 2 is of larger gauge than the auxiliary winding 4, the wires of both of the windings 2 and 4 being provided with varnish insulation for example, of polyvinyl formal resin. The surface 12 has arcuate portions 14 at evenly spaced intervals, these arcuate portions alternating with flat portions 16. The stator 6 in the completed motor is contained in a cylindrical stator housing 18 having a continuous surface 20 against which the arcuate portions 14 bear when the stator is disposed in the housing 18. The arrangement of the surface portions 14 against the surface 20 provides for good heat transfer and heat dissipation and minimizes the outside dimensions of the motor.

As shown in Figure 1, one end 2' of the main winding 2 is connected by means of a terminal 34 to a lead wire 24, one end 4' of the auxiliary winding 4 being connected to a lead wire 28 by means of another electrical terminal 34. The other ends 2" and 4" of the main and auxiliary windings, respectively, are commonly connected to a further terminal 34 which is connected in turn to a lead wire 30. All of the lead wires, 24, 28 and 30 are terminated by flag-type quick disconnect terminals 32 by way of crimping ferrules 40 crimped to these lead wires.

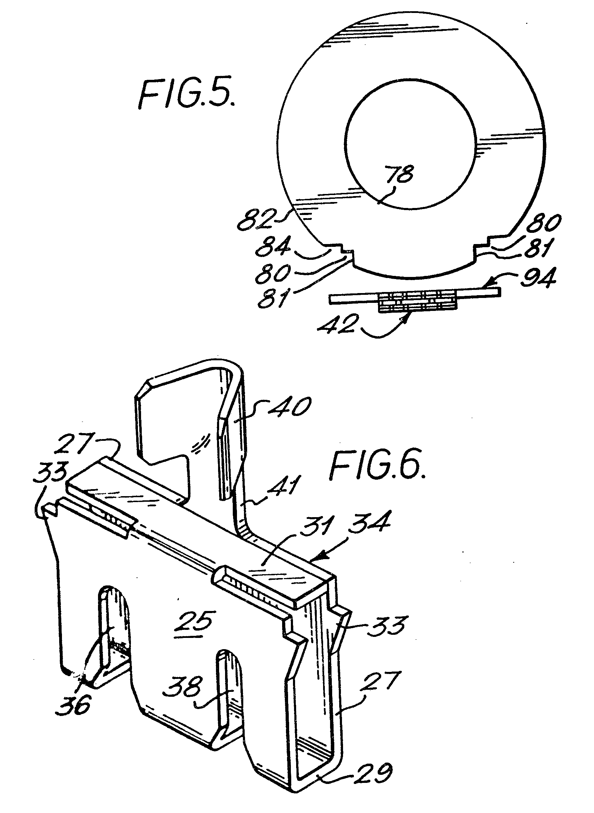

As shown in Figure 6, each terminal 34, the three terminals 34 being identical, comprises a pair of plates 25 and 27 connected by a web 29 and being spaced from one another by a cross-plate 31 which serves to stabilize and rigidify the terminal. First and second wire-receiving slots 36 and 38 respectively, extend through the web 29 and into the plates 25 and 27. The first slots 36 are dimensioned to receive the wire of the main winding 2 and the second slots 38, which are narrower than slots 36, to receive the wire of the auxiliary winding 4, each slot 36 and 38 being dimensioned relative to its respective wire so that when the wire has been forced into the slot the walls thereof pierce the varnish insulation to make electrical contact with the wire. Each plate 25 and 27 is provided with a retention barb 33 at each end thereof. A crimping ferrule 40 is formed integrally with the plate 27 being connected thereto by a neck portion 41, the cross-plate 31 being formed integrally with the plate 25.

As shown in Figure 3, an overall rectangular insulating housing 42 has a terminal-receiving side 46 and a base 43 which is parallel to, and spaced from, the side 46. Side walls 48 and 50 and end walls 52 extend between the faces 43 and 46, cavities 54, 56 and 58 extending into the housing 42 from the terminal-receiving side 46. These cavities are each dimensioned to receive a terminal 34. Adjacent cavities are separated from each other by barrier walls 60. Aligned wire-admitting slots 62 provided in the side walls 48 and 50 in communication with the cavity 54, are dimensioned to receive the relatively large gauge wire of the main winding 2. Aligned wire-admitting slots 64 in the side walls 48 and 50 opening into the cavity 56 are dimensioned to receive the smaller gauge wire of the auxiliary winding 4. Two pairs of aligned wire-admitting slots 66 and 68 in the side walls, communicate with and open into the centre cavity 58, slots 66 being narrower than slots 68 the slot 68 being dimensioned to receive the end 2" of the main winding 2 and the slot 66 to receive the end 4" of the auxiliary winding 4. After the wires of the windings 2 and 4 have been positioned in the wire-admitting slots according to the wiring pattern of Figure 1, the terminals 34 are inserted into the respective cavities 54, 56 and 58, to lodge the ends of the wires in the slots 36 and 38 of the terminals 34 so that the walls of these slots establish electrical contact with the wires of the windings 2 and 4.

In carrying out this wiring operation, the one end 2' of the winding 2 is positioned in the slots 62, the one end 4' of the winding 4, in the slots 64, the remaining ends 2" and 4" of these windings being positioned in the slots 68 and 66, respectively, as shown in Figure 2.

A mounting 44 on the housing 42 comprises arms 70 which extend from the end walls 52 of the housing 42, parallel legs 72 which extend downwardly, as seen in Figure 3, and away from the housing 42, and a strut 74 extending between the ends of the legs 72, but being offset from the housing 42 as shown at 76, so as to permit manufacture of the housing 42 and its mounting 44 as a simple injection moulding using core pins and mould parts which move in only one direction, it being unnecessary to use core pins which move laterally of the legs 72. A boss 71 is provided on the upwardly (as seen in Figure 3) surface of the strut 74.

In use, and when it is desired to connect the ends 2', 2", 4' and 4" of the winding 2 and 4 to the lead wires 24, 28, 30 it is merely necessary to place the housing 42 on the stator 6 with the base 43 of the housing 42 on the face 8 of the stator, the legs 72 extending across a pair of the portions 16 of the circumferential surface 12, which portions 16 lie on each side of one of the arcuate portions 14 of the surface 12. The ends of the windings 2 and 4 are then positioned as described above, in the wire-admitting slots 62, 64, 66 and 68 and the terminals 34 having the lead wires 24, 28 and 30 crimped thereto are inserted into the cavities 54, 56 and 58 to be retained therein by the barbs 33. The stator 6 is then assembled to the housing 18 as shown in Figure 4. The assembled stator end housing can then be carried to a subsequent work station for insertion of the rotor of the electric motor into the central opening of the stator.

It will be apparent that by virtue of the relative arrangement of the wire-admitting slots of the housing and the wire-receiving slots of the terminals 34, the terminals can be inserted into the cavities only with such orientation as correctly to connect the wires, albeit that the terminals 34 are identical.

It is desirable to dimension the mounting 44 so that the front edges 73 of the legs 72 bear against the internal surface 20 of the housing 18, the distance between the edges 73 being slightly greater than the chordal distance between the lines of contact between the edges 73 and the surface 20. In such case, the legs 72 and the end portions of the arms 70 and of the strut 74 are flexed, as indicated at 75 in Figure 4, in the case of the arms 70. The housing 42 is thereby firmly clamped to the face 8 of the stator 6. This mounting arrangement ensures that the electrical connections between the windings 2 and 4 and the terminals 34 will not be subjected to damage by vibration or shock when the motor is in use.

The boss 71 on the strut 74 is provided in order to permit the mounting 44 to be mounted on stators the thickness of which lies within a certain range of thicknesses, since the manufacturing specifications for motor stators permit a somewhat wide tolerance in the thickness of the stack of laminae. Such wide tolerance is necessary because the thickness of the stator is equal to the sum of the thicknesses of all of the individual laminae in the stator and may also be influenced to some extent by the condition of the surfaces of the laminae. It is not uncommon, for example, for a manufacturing specification to permit a variation of as much as 1.27 mm in the stator thickness where the desired thickness is about 3.175 cm. The boss 71 should therefore be dimensioned so that it will bear against the lower (as seen in Figure 2) face 10 of a stator 6 which lies at the lower end of the acceptable tolerance range for the stator thickness. The mounting 44 is deformed when the housing 42 is mounted on a stator having a thickness equal to the upper limit of the tolerance range. The deformation of the mounting 44 is absorbed by the strut 74 and may also be absorbed by the legs 72 and the arms 70. The housing and its mounting should therefore be of a material which is capable of undergoing such deformation. This material may be, for example, an unfilled nylon which is relatively firm when it is in thick sections but which will withstand flexure when it is in relatively thin elongate sections.

The stator 6 is dipped in resin and is baked, prior to the assembly of the housing 42 to the stator. The assembly of the housing 42 to the stator, the positioning of the ends of the windings in the housing 42, and insertion of the terminals 34 into the cavities of the housing 42, can be carried out as a series of closely consecutive steps and the stator is not subjected to extensive handling after the electrical connections have been made. Such a method of assembly is economical of labour and the stator reject rate is low.

The stator shown in Figure 5 has cylindrical surface 82 for location against the surface 20 of housing. In this case it is merely necessary to provide in the surface 82 spaced-apart notches 80 having parallel surfaces 81, for receiving the legs 72 of the mounting 44. Further notches 84 may be provided adjacent to the notches 80 so as to allow the arms 70 to flex as described above with reference to Figure 4.

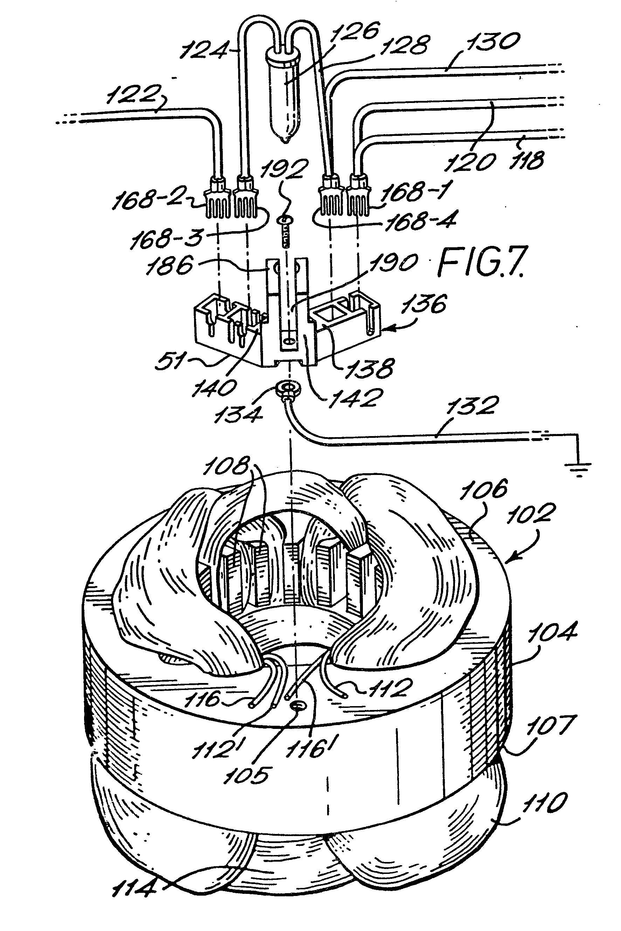

As shown in Figures 7 and 8, the stator 102 of a typical split phase two-pole electric induction motor comprises a substantially circular stack 104 of laminae, having an upper face 106, and a lower face 107, as seen in Figures 7 and 8. A plurality of spaced-apart teeth 108 extend inwardly towards the centre of the stator 2 into a central opening thereof. An auxiliary stator winding 114 extends between selected adjacent teeth 108 and beyond the faces 106 and 107, as shown. A main stator winding 110 is of larger gauge than the auxiliary winding 114. The ends 112, 112', and 116, 116' of the main and auxiliary windings, respectively, are located adjacent to a threaded hole 105 in the upper surface 106 of the stator 102 preparatory to these ends being connected to lead wires as described below.

The connections to the ends 112, 112', 116, 116' of the windings, comprise a first lead consisting of two wires 118 and 120 commonly connected to a terminal 168-1, a second lead consisting of a single wire 124 which is connected ʌɔ a terminal 168-2, a third lead consistiong of a single wire 124 which is connected to a terminal 168-3, and a fourth lead consisting of two wires 128 and 130 which are connected to a terminal 168-4. All four terminals 168 are identical. The wires 124 and 128 extend from the cylindrical body of a thermal protector 126 for the motor. Such protectors comprise a normally closed switch which automatically opens in response to a rise in the motor temperature above a predetermined value and which automatically closes when the temperature returns to the predetermined value. An additional electrical connection may be required in the form of a ground wire 132 which terminates in a ring tongue terminal 134 connected to the stator 102 by a fastener, as described below.

A terminal housing 136 of insulating material, preferably a moulded thermo-plastics material for example nylon, is generally V-shaped as seen in plan view comprising divergent arms 138 and 140 which extend from an enlarged centre portion 142. As best seen in Figure 9 each of the arms 138 and 140 has a terminal-receiving, upper side 144, as seen in Figure 9, front and rear side walls 146 and 148, end walls 150 and a base surface 151. First, second, third and fourth cavities 152, 154, 156 and 158, respectively, extend into the sides 144 of the arms 138 and 140 as shown. The first cavity 152 is adjacent to the outer end of the arm 138, the second cavity 154 being adjacent to the outer end of the arm 140, and third cavity 156 extending into the arm 140 adjacent to the centre portion 142, and the fourth cavity 158 extending into the arm 138 adjacent to the centre portion 142.

Pairs of opposed wire-admitting slots 160, 162, 164 and 166 are provided in the side walls 146 and 148 to permit of the ends 112, 112', 116 and 116' of the windings to be arranged selectively in the first, second and third cavities 152, 154 and 156, respectively. The slots 160

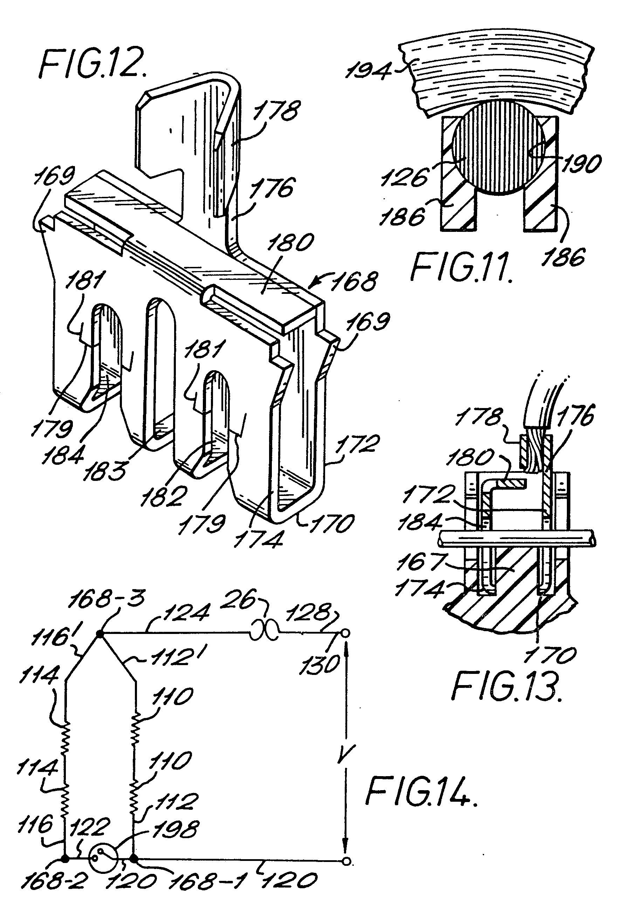

of the cavity 152 are dimensioned in width to receive the end 112 of the main winding 110, the slots 162 of the cavity 154 being dimensioned in width to receive the end 116 of the auxiliary winding 114. The slots 162 cannot, however, receive either end 112 or 112' of the main winding 110. The slots 162 are of a reduced width at their lower (as seen in Figure 9) portions to achieve such selective admission of the ends 116 and 116' of the winding 114. Of the pairs of slots 164 and 166 provided for the third cavity 156, the slots 164 are dimensioned to receive the end 112' of the main winding 110, slots 166 being dimensioned to receive only the end 116' of the auxiliary winding 114. As shown in Figure 13, each of the cavities has a wire supporting boss 167 extending outwardly from its base.

As shown in Figure 12, each terminal 168 comprises a web 170 from which extend parallel plates 172 and 174 to provide a substantially U-shaped structure. A neck portion 176 extending from the plate 172 carries a crimping ferrule 178 for electrically and mechanically connecting the terminal to its lead wire. A cross-plate 180 extends inwardly from the free edge of the plate 174 towards the plate 172. Wire-receiving slots 182 and 184 extend through the web 170 and into the plates 172 and 174, the slot 182 being of a width to receive, and establish electrical contact with, either of the ends 116 or 116' of the auxiliary winding 114, whilst the slot 184 is dimensioned to receive either of the ends 112 or 112' of the main winding 110. A central slot 183 disposed between, and being deeper than, the slots 182 and 184 serves to separate the spring systems provided by the two wire-receiving slots 182 and 184 but is not itself intended to receive a wire.

Each plate 172 and 174 is provided with a retention barb 169 at each end thereof.

Each of the slots 182 and 184 has associated shear lines 179 and 181, the former extending from the edges of the slot laterally away therefrom and the shear line 181 extending from the outer end of the shear line 179 parallel to the slot and towards its base. During manufacture, the terminal is sheared along the lines 179 and 181 and the material bounded by these shear lines is bent out of the plane of the blank from which the terminal is to be formed, the bent out material being then bent back into the plane of the blank, in such a way that a shoulder is formed on each edge of each slot, which shoulder faces downwardly as seen in Figure 12 and towards the wire-receiving end of the slot. The shoulders thus produced provide edges which cut into or penetrate the varnish insulation of a wire as it is moved into the slot.

Each terminal 168 can be inserted into a cavity 152, 154, 156 or 158 only in one orientation of the terminal, the wire-admitting slots 160, 162, 164 and 166 in the housing 136 being so located that the appropriate wire-receiving slot 182 or 184, will receive the wire which is positioned in a particular cavity.

The cavity 158 has no associated wire-admitting slot although it receives the terminal 168-4. This terminal serves primarily as a strain relief member for the wire 128 which extends from the protector 126, so that tensile forces applied to the wire 130 are not transmitted through the wire 128 to the protector 126.

The central portion 142 of the housing 136 has a pair of columns 186 upstanding from its upper (as seen in Figure 9) surface 185, opposed surfaces of the columns 186 being provided with arcuate cross-section grooves 188 dimensioned to receive there between the housing of the protector 126. A recess 190 in the central portion 142 has in its base, an opening for accommodating a screw 192 (see Figure 7).

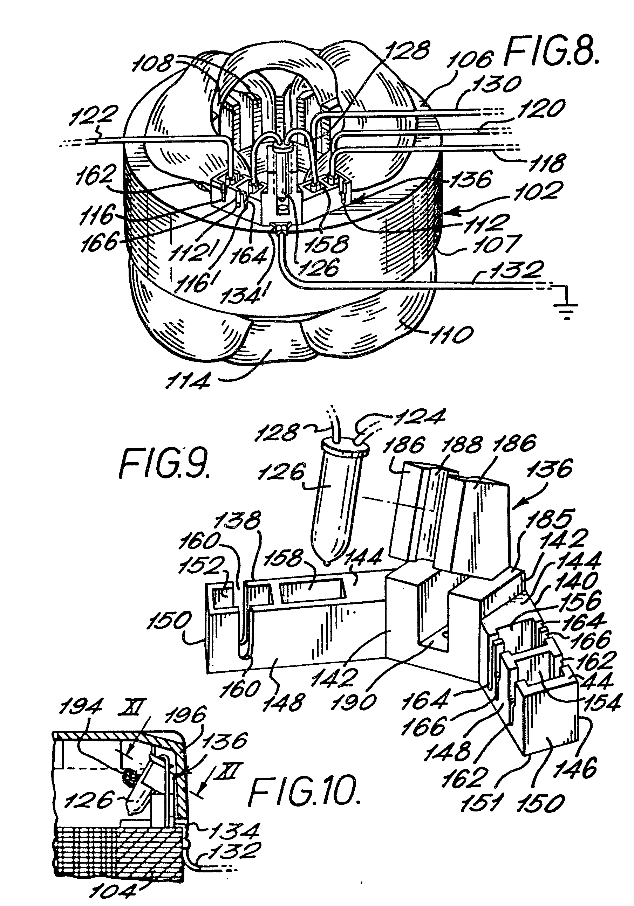

The housing 136 is assembled to the stator 102 after the latter has been dipped in a polymeric material and baked at an elevated temperature to cure the polymer. After the baking step, the ends 112, 112', and 116, 116' of the windings 110 and 114 are located as shown in Figure 7 adjacent to the threaded opening 105 in the surface 106 of the stator 102. The ring tongue terminal 134 is located in alignment with the opening 105 and the housing 136 is then positioned on the surface 106 and is secured thereto by means of the screw 192 so that the wire 132 of the stator is grounded. Thereafter, the end 112 of the winding 110 is positioned in the slots 160, the end 116 of the winding 114 is positioned in the slots 162, and the remaining ends 112', 116' of these windings are positioned in the appropriate slots 164 and 166, each wire end resting upon a support boss 167 in its respective cavity. The terminals 168 are then inserted into the appropriate cavities 152, 154, 156 and 158 to be retained therein by the barbs 169, so that the terminals and the lead wires are thereby connected to the appropriate ends of the stator windings. As will be apparent from Figure 13, each wire end is supported by the boss 167 in its cavity, in such a way that when the appropriate terminal 168 is inserted into the cavity the wire end is received in a wire-receiving slot of the terminal. Thus, the end 112 of the main winding 110 is connected to the terminal 168-1 and thereby to the wires 118, 120, the end 116 of the auxiliary winding 114 is connected to the terminal 168-2 and thus to the wire 122, and the remaining ends 112', 116' of the windings are commonly connected to the terminal 168-3 and thus to the wire 124 which extends from the protector 126. The protector 126 is thereafter positioned between the columns 186 so that as shown in Figures 10 and 11, the protector 126 lies beneath a portion 194 of the auxiliary winding 114. As shown in Figure 10, a motor housing 196 is finally positioned so as to cover the housing 136 and the protector 126. The stator assembly is shown in its fully assembled condition in Figure 8, but without the motor housing 136.

The circuit of a typical split phase two-pole electric induction motor is shown in Figure 14 in which the connections produced as described above are identified. As shown in Figure 14, the wires 120 and 122 extend to a centrifugal switch 198 which is normally closed so that power is supplied to both of the windings 110 and 114 when the motor is started. After the motor attains its operating speed the centrifugal switch 198 opens and power is supplied only to the main winding 110.

## Claims

1. An electrical connecting arrangement comprising an insulating housing (42 or 136) defining first (54 or 154), second (56 or 152) and third (58 or 156) terminal receiving cavities, each cavity communicating with a first wire-admitting slot (66 or 164), first, second and third electrical terminals (34 or 168) each comprising a plate (25 or 174) having a first wire-receiving slot (36 or 184) therein and being insertable into a respective one of the cavities (54, 56, 58 or 152, 154, 156) so as to force into the first wire-receiving slot (36 or 184) of the terminal (34 or 168) a wire end (2', 4', 2" or 4", or 112, 112', 116 or 116') extending through the first wire-admitting slot (62 or 162, 64 or 160, 66 or 164) of the cavity (54 or 154, 56 or 152, 58 or 156) and across such cavity, to make electrical connection between the terminal (34 or 168) and such wire, the first, second and third terminals (34 or 168) having thereon, means (40 or 178) for connecting them to respective first (24 or 122), second (30 or 124) and third (32 or 118) electrical leads; *characterised in that* each plate (25 or 174) has a second wire-receiving slot (38 or 182) which is juxtaposed to the first wire-receiving slot (36 or 184), the first wire-receiving slot (36 or 184) being dimensioned to receive a first wire (2 or 110) of a first gauge and the second wire-receiving slot (38 or 182) which is narrower than the first wire-receiving slot (36 or 184), being dimensioned to receive a second wire (4 or 114) of a second gauge which is smaller than the first gauge, but not to receive a wire (2 or 110) of the first gauge, the third cavity (58 or 156) having in communication therewith a second wire-admitting slot (48 or 166) juxtaposed to the first wire-admitting slot (66 or 164), the first wire-admitting slot (66 or 164), which is narrower than the second wire-admitting slot (68 or 166), being dimensioned to receive a wire (4 or 114) of the second gauge but not to receive a wire of the first gauge, the wire-admitting slot (64 or 160) of the second cavity (56 or 152) being of a width to receive a wire (4 or 114) of the second gauge but not to receive a wire (2 or 110) of the first gauge; whereby upon positioning one end (2' or 112) of the first wire (2) in the wire-admitting slot (62 or 162) of the first cavity (54 or 154), positioning one end (4' or 116') of the second wire (4 or 114) in the wire-admitting slot (64 or 160) of the second cavity (56 or 152) and positioning the other ends (2" and 4", or 112' and 114') of the first and second wires (2 and 4; or 110 and 114) in the respective first and second wire-admitting slots (66 and 68; or 164 and 166) of the third cavity (58 or 156) and thereafter inserting each of the terminals (34 or 168) into a respective one of the cavities (54, 56 and 58; or 152, 154 and 156), the ends of first and second wires (2 and 4; or 110 and 114) are connected to the terminals (34 or 168).

2. Electrical connecting arrangement according to Claim 1, *characterised in that* the housing (42) is elongate, the cavities (54, 56 and 58) succeeding one another lengthwise of the housing (42), a mounting (44) comprising a deformable frame being connected to either end (52) of the housing (42) and being adapted to receive an edge portion of an electric motor stator (6).

3. Electrical connecting arrangement according to Claim 2, *characterised in that* the mounting (44) is in the form of a rectangular frame comprising a pair of arms (70), a pair of legs (72) and a strut (74), each arm (70) extending from a respective end (52) of the housing (42) and being connected thereto at one end, the other end of each arm (70) being connected to one end of a leg (72), the legs (72) extending in the same direction and the other ends of the legs (72) being connected by a strut (74) which is offset from the housing (42) in the transverse direction of the length of the housing (42).

4. Electrical connecting arrangement according to Claim 1, *characterised in that* the housing (136) has a central portion (142) adapted to receive a thermal protector (126) for an electric motor, the cavities (152, 154 and 156) being distributed on either side of the central portion (142).

5. Electrical connecting arrangement according to any one of the preceding claims, *characterised in that* each terminal (34 or 168) comprises two juxtaposed plates (25 or 172) connected by a web (29 or 170) to provide a U-shaped member, a reinforcing cross-plate (31 or 180) extending from an edge of one plate (25 or 172) remote from the web (29 or 170) towards the other plate (25 or 172), the wire-receiving slots (26 and 38; or 182 and 184) extending through the web (29 or 170) into both the plates (25 or 172), the edges of the plates (25 or 172) extending between the web (29 or 170) and the cross-plate (31 or 180) being provided with means (33 or 169) for retaining the terminal (34 or 168) in its cavity (54, 56 or 58; or 152, 154, or 156).

6. Electrical connecting arrangement according to Claim 5, *characterised in that* a third slot (183) positioned between the wire-receiving slots (182 and 184) and extending through the web (170) is deeper than the wire-receiving slots (182 and 184).

7. An electric motor stator assembly comprising a stator (6 or 102) having windings, and an insulating terminal housing (42 or 136) mounted on a face (8 or 106) of the stator (6 or 102), the housing having a base (43 or 151) adjacent to the stator and a terminal receiving side (46 or 144) into which extend first, second and third terminal-receiving cavities (54, 56 and 58; or 152, 154 or 156), each such cavity having a first wire-admitting slot (62 or 162, 64 or 160, 66 or 164) communicating therewith and receiving an end (2', 4', 2" or 4", or 112, 112', 116 or 116') of one of the windings (2 or 4; or 110 or 114), each such end being wedged in a first wire-receiving slot (36 or 38; or 182 or 184) of an electrical terminal (34 or 168) in the cavity (54, 56 and 58; or 152, 154 and 156) and each such terminal being connected to a lead (24, 30 or 32; or 122, 124 or 118) of the stator (6 or 102), *characterised in that* the stator has main and auxiliary windings of different gauge and each terminal (34 or 168) has a second wire-receiving slot (38 or 182), the first wire-receiving slot (36 or 184) being dimensioned to receive an end of the main winding (2 or 110) and the second wire-receiving slot (38 or 182) being dimensioned to receive an end of the auxiliary winding (4 or 114) the first slot (36 or 184) of the terminal in the first cavity (54 or 152) and the first slot (36 or 184) of the terminal in the third cavity (58 or 156), each receiving a respective end (2' and 2", or 112 and 112') of the main winding (2 or 110) and the second slot (38 or 182) of the terminal in the second cavity (56 or 154) and the second slot (38 or 182) of the terminal in the third cavity (58 or 156) each receiving an end (4' and 4", or 116 and 116') of the auxiliary winding (4 or 114), each cavity (54, 56 and 58 or 152, 154 and 156) having a second wire-admitting slot (64 or 162), each wire-admitting slot (62 and 64 or 160 and 162) of such cavity being positioned opposite to one of the wire-receiving slots (36 or 38; or 182 or 184) of the terminal (34 or 168) in such cavity.

8. An assembly according to Claim 7, *characterised by* a tubular stator housing (18) in which the stator (6) is received, a mounting (44) for the terminal housing (42), embracing an edge portion (14, 14') of the stator (6), the mounting (44) having been flexed (at 75) in such a way by engagement with the inner wall (20) of the stator housing (18) that the mounting (44) is clamped to the stator (6).

9. An assembly according to Claim 7, *characterised in that* the terminal housing (136) comprises a receptacle (186) in which is disposed a thermal protector (126) for the motor, a first lead (124) of the thermal protector (126) being connected to the terminal (168-3) in the third cavity (156) and second lead (128) thereof being connected to a further electrical terminal (168-4) retained in a fourth cavity (158) of the terminal housing (136) to afford strain relief for the connection between the thermal protector (126) and its second lead (128), an external lead (130) also being connected to the further terminal (168-4).

10. An assembly according to Claim 9, *characterised in that* the terminal housing (136) comprises a central portion (142) upon which the receptacle (186) is mounted, and a pair of divergent portions (148) extending from opposite sides of the central portion (142) one of the divergent portions (148) defining the first (152) and fourth (158) cavities and the other divergent portion (148) defining the remaining cavities (154 and 156).

## Revendications

1. Dispositif de connexion électrique comprenant un boîtier isolant (42 ou 136) présentant des première (54 ou 154), deuxième (56 ou 152) et troisième (58 ou 156) cavités, de réception de bornes, chaque cavité communiquant avec une première fente (66 ou 164) d'introduction d'un fil conducteur, des première, deuxième et troisième bornes électriques (34 ou 168) comprenant chacune une lame (25 ou 174) qui présente une première fente (36 ou 184) de réception d'un fil conducteur et qui peut être insérée dans l'une, correspondante, des cavités (54, 56, 58 ou 152, 154, 156) afin d'introduire à force dans la première fente (36 ou 184) de réception d'un fil conducteur de la borne (34 ou 168) une extrémité de fil (2', 4', 2" ou 4", ou 112, 112', 116 ou 116') passant dans la première fente (62 ou 162, 64 ou 160, 66 ou 164) d'introduction d'un fil conducteur de la cavité (54 ou 154, 56 ou 152, 58 ou 156) et passant à travers cette cavité, afin d'établir une connexion électrique entre la borne (34 ou 168) et ce fil, des première, deuxième et troisième bornes (34 ou 168) portant des organes (40 ou 178) destinés à les connecter à des premier (24 ou 122), deuxième (30 ou 124) et troisième (32 ou 118) conducteurs électriques respectifs; caractérisé en ce que chaque lame (25 ou 174) présente une seconde fente (38 ou 182) de réception d'un fil conducteur qui est juxtaposée à la première fente (36 ou 184) de réception d'un fil conducteur, la première fente (36 ou 184) de réception d'un fil conducteur étant dimensionnée de manière à recevoir un premier fil conducteur (2 ou 110) d'un premier diamètre et la seconde fente (38 ou 182) de réception d'un fil conducteur étant plus étroite que la première fente (36 ou 184) de réception d'un fil conducteur et étant dimensionnée de manière à recevoir un second fil conducteur (4 ou 114) d'un second diamètre qui est inférieur au premier diamètre, mais non de manière à recevoir un fil conducteur (2 ou 110) du premier diamètre, la troisième cavité (58 ou 156) communiquant avec une seconde fente (48 ou 166) d'introduction d'un fil conducteur juxtaposée à la première fente (66 ou 164) d'introduction d'un fil conducteur, la première fente (66 ou 164) d'introduction d'un fil conducteur, qui est plus étroite que la seconde fente (68 ou 166) d'introduction d'un fil conducteur, étant dimensionnée de manière à recevoir un fil conducteur (4 ou 114) du second diamètre mais non à recevoir un fil conducteur du premier diamètre, la fente (64 ou 160) d'introduction d'un fil de la deuxième cavité (56 ou 152) ayant une largeur lui permettant de recevoir un fil conducteur (4 ou 114) du second diamètre, mais non un fil conducteur (2 ou 110) du premier diamètre; de manière que, en positionnant une extrémité (2' ou 112) du premier fil conducteur (2) dans la fente (62 ou 162) d'introduction d'un fil conducteur de la première cavité (54 ou 154), en positionnant une extrémité (4' ou 116') du second fil conducteur (4 ou 114) dans la fente (64 ou 160) d'introduction d'un fil de la deuxième cavité (56 ou 152) et en positionnant les autres extrémités (2" et 4"; ou 112' et 114') des premier et second fils (2 et 4; ou 110 et 114) dans les première et seconde fentes respectives (66 et 68; ou 164 et 166) d'introduction de fils de la troisième cavité (58 ou 156), et en insérant ensuite chacune des bornes (34 ou 168) dans l'une, correspondante, des cavités (54, 56 et 58; ou 152, 154 et 156), les extrémités des premier et second fils conducteurs (2 et 4; ou 110 et 114) soient connectées aux bornes (34 ou 168).

2. Dispositif de connexion électrique selon la revendication 1, caractérisé en ce que le boîtier (42) est allongé, les cavités (54, 56 et 58) se succédant les unes aux autres le long du boîtier (42), un élément (44) de montage comprenant un cadre déformable relié à chaque extrémité (52) du boîtier (42) et destiné à recevoir une partie de bord d'un stator (6) de moteur électrique.

3. Dispositif de connexion, électrique selon la revendication 2, caractérisé en ce que l'élément (44) de montage se présente sous la forme d'un cadre rectangulaire comprenant deux bras (70), deux branches (72), et une entretoise (74), chaque bras (70) partant d'une extrémité correspondante (52) du boîtier (42) et étant relié par une extrémité à cette dernière, l'autre extrémité de chaque bras (70) étant reliée à une extrémite d'une branche (72), les branches (72) étant orientées dans la même direction et les autres extrémitées des branches (72) étant reliées par une entretoise (74) qui est décalée du boîtier (42) dans la direction transversale à la longueur du boîtier (42).

4. Dispositif de connexion électrique selon la revendication 1, caractérisé en ce que le boîtier (136) comporte une partie centrale (142) destinée à recevoir un élément de protection thermique (126) d'un moteur électrique, les cavitiés (152, 154 et 156) étant réparties de part et d'autre de la partie centrale (142).

5. Dispositif de connexion électrique selon l'une quelconque des revendications précédentes, caractérisé en ce que chaque borne (34 ou 168) comprend deux lames juxtaposées (25 ou 172) reliées par une âme (29 ou 170) afin de former un organe de configuration en U, une plaque transversale (31 ou 180) de renfort s'étendant d'un bord d'une lame (25 ou 172), éloigné de l'âme (29 ou 170), vers l'autre lame (25 ou 172), les fentes (26 et 38; ou 182 et 184) de réception de fils conducteurs traversant l'âme (29 ou 170) et pénétrant dans les deux lames (25 ou 172), les bords des lames (25 ou 172) s'étendant entre l'âme (29 ou 170) et la plaque transversale (31 ou 180) comportant des organes (33 ou 169) destinés à retenir la borne (34 ou 168) dans sa cavité (54, 56 ou 58; ou 152, 154, ou 156).

6. Dispositif de connexion électrique selon la revendication 5, caractérisé en ce qu'une troisième fente (183) située entre les fentes (182 et 184) de réception de fils et s'étendant à travers l'âme (170) est plus profonde que les fentes (182 et 184) de réception de fils conducteurs.

7. Montage de stator d'un moteur électrique comprenant un stator (6 ou 102) qui comporte des enroulements, et un boîtier isolant (42 ou 136) à bornes monté sur une face (8 ou 106) du stator (6 ou 102), le boîtier comportant une base (43 ou 151) adjacente au stator et une face (46 ou 144) de réception de bornes dans laquelle pénètrent des première, deuxième et troisième cavités (54, 56 et 58; ou 152, 154 ou 156) de réception de bornes, chacune de ces cavités présentant une première fente (62 ou 162, 64 ou 160, 66 ou 164) d'introduction d'un fil conducteur communiquant avec cette cavité et recevant une extrémité (2, 4', 2″ ou 4″, ou 112, 112', 116 ou 116') de l'un des enroulements (2 ou 4; ou 110 ou 114), chaque extrémité étant coincée dans une première fente (36 ou 38; ou 182 ou 184) de réception d'un fil conducteur d'une borne électrique (34 ou 168) placée dans la cavité (54, 56 et 58; ou 152, 154 et 156) et chaque borne étant connectée à un conducteur (24, 30 ou 32; ou 122, 124 ou 118) du stator (6 ou 102), caractérisé en ce que le stator comporte des enroulements principal et auxiliaire en fils de diamètres différents et chaque borne (34 ou 168) présente une seconde fente (38 ou 182) de réception d'un fil conducteur, la première fente (36 ou 184) de réception d'un fil étant dimensionnée de manière à recevoir une extrémité de l'enroulement principal (2 ou 110) et la seconde fente (38 ou 182) de réception d'un fil étant dimensionnée de manière à recevoir une extrémité de l'enroulement auxiliaire (4 ou 114), la première fente (36 ou 184) de la borne placée dans la première cavité (54 ou 152) et la première fente (36 ou 184) de la borne placée dans la troisième cavité (58 ou 156) recevant chacune une extrémité respective (2' et 2″, ou 112 et 112″) de l'enroulement principal (2 ou 110) et la seconde fente (38 ou 182) de la borne placée dans la deuxième cavité (56 ou 154) et la seconde fente (38 ou 182) de la borne placée dans la troisième cavité (58 ou 156) recevant chacune une extrémité (4' et 4″, ou 116 et 116') de l'enroulement auxiliaire (4 ou 114), chaque cavité (54, 56 et 58 ou 152, 154 et 156) présentant une seconde fente (64 ou 162) d'introduction d'un fil conducteur, chaque fente (62 et 64 ou 160 et 162) d'introduction d'un fil conducteur d'une cavité étant opposée à l'une des fentes (36 ou 38; ou 182 ou 184) de réception d'un fil de la borne (34 ou 168) de cette cavité.

8. Montage selon la revendication 7, caractérisé par un boîtier tubulaire (18) de stator dans lequel le stator (6) est logé, un élément (44) de montage du boîtier (42) à bornes entourant une partie (14, 14') du bord du stator (6), l'élément (44) de montage étant fléchi (en 75) de telle manière qu'en portant contre la paroi intérieure (20) du boîtier (18) du stator, l'élément (44) de montage soit bridé sur le stator (6).

9. Montage selon la revendication 7, caractérisé en ce que le boîtier (136) à bornes comprend un logement (186) dans lequel est disposé un élément de protection thermique (126) du moteur, un premier conducteur (124) de l'élément de protection thermique (126) étant connecté à la borne (168-3) placée dans la troisième cavité (156) et un second conducteur (128) de cet élément de protection étant connecté à une autre borne électrique (168-4) retenue dans une quatrième cavité (158) du boîtier (136) à bornes afin de soulager des contraintes la connexion entre l'élément de protection thermique (126) et son second conducteur (128), un conducteur extérieur (130) étant également connecté à l'autre borne (168-4).

10. Montage selon la revendication 9, caractérisé en ce que le boîtier (136) à bornes comprend une partie centrale (142) sur laquelle le logement (186) est monté, et deux parties divergentes (148) qui partent des côtés opposés de la partie centrale (142), l'une des parties divergentes (148) présentant les première (152) et quatrième (158) cavités et l'autre partie divergente (148) présentant les autres cavités (154 et 156).

**Patentansprüche**

1. Elektrische Verbindungsanordnung mit einem isolierenden Gehäuse (42 oder 136), das erste (54 oder 154), zweite (56 oder 152) und dritte (58 oder 156) Aufnahmeräume für Anschlußklemmen aufweist, wobei jeder Aufnahmeraum mit einem ersten Drahteinführschlitz (62 oder 162, 64 oder 160, 66 oder 164) versehen ist, mit ersten, zweiten und dritten elektrischen Anschlußklemmen (34 oder 168), die jeweils eine Platte (25 oder 174) aufweisen, die einen ersten Drahtaufnahmeschlitz (36 oder 184) hat, wobei die Klemmen in jeweils einen der Aufnahmeräume (54, 56, 58 oder 152, 154, 156) einsetzbar sind, so daß in den ersten Drahtaufnahmeschlitz (36 oder 184) der Klemme (34 oder 168) ein Drahtende (2', 4', 2" oder 4", oder 112, 112', 116 oder 116'), das sich durch den ersten Drahteinführschlitz (62 oder 162, 64 oder 160, 66 oder 164) des Aufnahmeraums (54 oder 154, 56 oder 152, 58 oder 156) und quer durch den Aufnahmeraum ersteckt, hineingedrückt wird, um eine elektrische Verbindung zwischen der Klemme (34 oder 168) und diesem Draht herzustellen, wobei die erste die zweite und die dritte Klemme (34 oder 168) Mittel, (40 oder 178) für ihre Verbindung mit ersten (24 oder 122), zweiten (28 oder 124) und dritten (30 oder 118) elektrischen Leitern aufweisen, dadurch gekennzeichnet, daß jede Platte (25 oder 174) einen zweiten Drahtaufnahmeschlitz (38 oder 182) hat, der neben dem ersten Drahtaufnahmeschlitz (36 oder 184) angeordnet ist, wobei der erste Drahtaufnahmeschlitz (36 oder 184) so bemessen ist, daß er einen ersten Draht (2 oder 110) einer ersten Abmessung aufnimmt, und wobei der zweite Drahtaufnahmeschlitz (38 oder 182), der enger ist als der erste Drahtaufnahmeschlitz (36 oder 184), so bemessen ist, daß er einen zweiten Draht (4 oder 114) einer zweiten Abmessung aufnimmt, die kleiner ist als die erste Abmessung, daß er aber nicht einen Draht (2 oder 110) der ersten Abmessung aufnimmt, wobei der dritte Aufnahmeraum (58 oder 156) in Verbindung mit einem zweiten Drahteinführschlitz (68 oder 166) steht, der neben dem ersten Drahteinführschlitz (66 oder 164) angeordnet ist, wobei der erste Drahteinführschlitz (66 oder 164), der enger ist als der zweite Drahteinführschlitz (68 oder 166), so bemessen ist, daß er einen Draht (4 oder 114) der zweiten Abmessung, aber nicht einen Draht der ersten Abmessung aufnimmt, wobei der Drahteinführschlitz (64 ober 160) des zweiten Aufnahmeraums (56 oder 152) eine Breite hat, die geeignet ist, einen Draht (4 oder 114) der zweiten Abmessung, aber nicht einen Draht (2 oder 110) der ersten Abmessung aufzunehmen, wodurch die Enden des ersten und des zweiten Drahtes (2 und 4 oder 110 und 114) mit den Klemmen (34 oder 168) verbunden sind, nachdem ein Ende (2' oder 112) des ersten Drahtes (2) in den Drahteinführschlitz (62 oder 162) des ersten Aufnahmeraums (54 oder 154) eingelegt, ein Ende (4' oder 116') des zweiten Drahtes (4 oder 114) in den Drahteinführschlitz (64 oder 160) des zweiten Aufnahmeraums (56 oder 152) eingelegt ist und die anderen Enden (2" und 4" oder 112' und 116) des ersten und des zweiten Drahtes (2 und 4 oder 110 und 114) in die jeweiligen ersten und zweiten Drahteinführschlitze (66 und 68 oder 164 und 166) des dritten Aufnahmeraums (58 oder 156) eingelegt sind und danach jede der Klemmen (34 oder 168) in jeweils einen der Aufnahmeräume (54, 56 und 58 oder 152, 154 und 156) eingesetzt ist.

2. Elektrische Verbindungsanordnung nach Anspruch 1, dadurch gekennzeichnet, daß das Gehäuse (42) länglich ist und die Aufnahmeräume (54, 56 und 58) in Längsrichtung des Gehäuses (42) aufeinanderfolgen, und daß ein Träger (44), der einen verformbaren Rahmen aufweist, mit den beiden Enden (52) des Gehäuses (42) verbunden ist und zur Aufnahme eines Randteils eines Stators (6) eines Elektromotors ausgebildet ist.

3. Elektrische Verbindungsanordnung nach Anspruch 2, dadurch gekennzeichnet, daß der Träger (44) die Form eines rechteckigen Rahmens hat, der ein Paar Arme (70), ein Paar Füße (72) und eine Strebe (74) aufweist, wobei jeder Arm (70) sich je von einem Ende (52) des Gehäuses (42) erstreckt und damit mit einem Ende verbunden ist, wobei das andere Ende jedes Armes (70) mit einem Ende eines Fußes (72) verbunden ist, wobei die Füße (72) sich in der gleichen Richtung erstrecken und die anderen Enden der Füße (72) mittels einer Strebe (74) verbunden sind, die gegenüber dem Gehäuse (42) in einer Richtung quer zur Längsrichtung des Gehäuses (42) versetzt ist.

4. Elektrische Verbindungsanordnung nach Anspruch 1, dadurch gekennzeichnet, daß das Gehäuse (136) einen Mittelteil (142) hat, der zur Aufnahme eines Wärmeschutzgliedes (126) für einen Elektromotor ausgebildet ist, wobei die Aufnahmeräume (152, 154 und 156) zu beiden Seiten des Mittelteils (142) verteilt angeordnet sind.

5. Elektrische Verbindungsanordnung nach irgend einem der vorhergehenden Ansprüche, dadurch gekennzeichnet, daß jede Klemme (34 oder 168) zwei einander gegenüberliegende Platten (25 oder 172) aufweist, die durch einen Steg (29 oder 170) zur Bildung eines U-förmigen Gliedes verbunden sind, sowie eine verstärkende Querplatte (31 oder 180), die sich von einer Kante einer der Platten (25 oder 172), die entfernt von dem Steg (29 oder 170) angeordnet ist, gegen die andere Platte (25 oder 172) erstreckt, wobei die Drahtaufnahmeschlitze (36 und 38 oder 182 und 184) sich durch den Steg (29 oder 170) hindurch in beide Platten (25 oder 172) hineinerstrecken, und wobei die Kanten der Platten (25 oder 172), die sich zwischen dem Steg (29 oder 170) und der Querplatte (31 oder 180) erstrecken, mit Haltemitteln (33 oder 169) zum Halten der Klemme (34 oder 168) in ihrem Aufnahmeraum (54, 56 oder 58 oder 152, 154 oder 156) versehen sind.

6. Elektrische Verbindungsanordnung nach Anspruch 5, dadurch gekennzeichnet, daß ein dritter Schlitz (183), der zwischen den Drahtaufnahmeschlitzen (182 und 184) angeordnet ist und der sich durch den Steg (170) erstreckt, tiefer als die Drahtaufnahmeschlitze (182 und 184) ist.

7. Statoranordnung für einen Elektromotor mit einem mit Windungen versehenen Stator (6 oder 102) und einem isolierenden Klemmengehäuse (42 oder 136), das an einer Stirnseite (8 oder 106) des Stators (6 oder 102) angeordnet ist, wobei das Gehäuse eine dem Stator benachbarte Unterseite (43 oder 151) und eine Klemmenaufnahmeseite (46 oder 144) hat, in die sich erste, zweite und dritte Klemmenaufnahmeräume (54, 56 und 58 oder 152, 154 und 156) hineinerstrecken, wobei jeder Aufnahmeraum einen ersten Drahteinführschlitz (62 oder 162, 64 oder 160, 66 oder 164) hat, der mit dem Aufnahmeraum in Verbindung steht und ein Ende (2', 4', 2" oder 4" oder 112, 112', 116 oder 116') einer der Windungen (2 oder 4 oder 110 oder 114) aufnimmt, wobei jedes solche Ende in einem ersten Drahtaufnahmeschlitz (36 oder 38 oder 182 oder 184) einer elektrischen Anschlußklemme (34 oder 168) in dem Aufnahmeraum (54, 56 und 58 oder 152, 154 und 156) eingeklemmt ist und jede dieser Klemmen mit einem Leiter (24, 28 oder 30 oder 122, 124 oder 118) des Stators (6 oder 102) verbunden ist, dadurch gekennzeichnet daß der Stator Haupt- und Nebenwindungen unterschiedlicher Abmessungen hat und jede Klemme (34 oder 168) einen zweiten Drahtaufnahmeschlitz (38 oder 182) hat, wobei der erste Drahtaufnahmeschlitz (36 oder 184) so bemessen ist, daß er ein Ende der Hauptwindung (2 oder 110) aufnimmt, und der zweite Drahtaufnahmeschlitz (38 oder 182) zu bemessen ist, daß er ein Ende der Hilfswindung (4 oder 114) aufnimmt, daß der erste Schlitz (36 oder 184) der Klemme in dem ersten Aufnahmeraum (54 oder 152) und der erste Schlitz (36 oder 184) der Klemme in dem dritten Aufnahmeraum (58 oder 156) jeweils eine Ende (2' und 2" oder 112 und 112') der Hauptwindung (2 oder 110) aufnehmen, und daß der zweite Schlitz (38 oder 182) der Klemme in dem zweiten Aufnahmeraum (56 oder 154) und der zweite Schlitz (38 oder 182) der Klemme in dem 3. Aufnahmeraum (58 oder 156) jeweils ein Ende (4' und 4" oder 116 und 116') der Hilfswindung (4 oder 114) aufnehmen, wobei jeder Aufnahmeraum (54, 56 und 58 oder 152, 154 und 156) einen zweiten Drahteinführschlitz (68 oder 166) hat, wobei jeder Drahteinführschlitz (62 und 64 oder 160 und 162) eines solchen Aufnahmeraums einem der Drahtaufnahmeschlitze (36 oder 38 oder 182 oder 184) der Klemme (34 oder 168) in diesem Aufnahmeraum gegenüber angeordnet ist.

8. Anordnung nach Anspruch 7, gekennzeichnet durch ein rohrförmiges Statorgehäuse (18), in dem der Stator (6) aufgenommen ist, einen Träger (44) für das Klemmengehäuse (42), der einen Randteil (14) des Stators (6) umgibt, wobei der Träger (44) durch Berührung mit der Innenwand (20) des Statorgehäuses (18) so verformt ist (bei 75), daß der Träger (44) an dem Stator (6) festgeklemmt ist.

9. Anordnung nach Anspruch 7, dadurch gekennzeichnet, daß das Klemmengehäuse (136) einen Behälter (186) aufweist, in dem ein Wärmeschutzglied (126) für den Motor angeordnet ist, wobei ein erster Leiter (124) des Wärmeschutzgliedes (126) mit der Klemme (168-3) in dem dritten Aufnahmeraum (156) verbunden und sein zweiter Leiter (128) mit einer weiteren elektrischen Anschlußklemme (168-4) verbunden ist, die in einem vierten Aufnahmeraum (158) des Klemmengehäuses (136) gehaltert ist, um eine Zugentlastung für die Verbindung zwischen dem Wärmeschutzglied (126) und seinem zweiten Leiter (128) zu bewirken, wobei ein nach außen führender Leiter (130) auch mit der weiteren Klemme (168-4) verbunden ist.

10. Anordnung nach Anspruch 9, dadurch gekennzeichnet, daß das Klemmengehäuse (136) einen Mittelteil (142) aufweist, auf dem der Behälter (186) angeordnet ist, sowie ein Paar divergierender Teile (148), die sich von entgegengesetzten Seiten des Mittelteils (142) erstrecken, wobei eines der divergierenden Teile (148) den zweiten (152) und vierten (158) Aufnahmeraum und das andere divergierende Teil (148) die übrigen Aufnahmeräume (154 und 156) begrenzt.

0 004 423

FIG.1.

FIG.3.

FIG.4.

1

FIG.2.

0 004 423

2

FIG.5.

78

82
84
80
81

80
81

94

42

40

27
33

41

FIG.6.

31 34

33

25

36

38

27

29

FIG.7.

FIG.8.

FIG.9.

FIG.10.

FIG.12.

FIG.11.

FIG.13.

FIG.14.

6